# DEMANDE DE BREVET EUROPEEN

(11) **EP 2 463 801 A1**
(43) Date de publication de la demande: **13.06.2012**
(21) Numéro de dépôt: 10306384.8
(22) Date de dépôt: 09.12.2010
(51) Int. Cl.: G06K 7/10

(54) **Dispositif portable de lecture optique de code 2D**

(71) Demandeur: Gemalto SA, 92190 Meudon (FR)
(72) Inventeur: Lahmar, Fakher, 83260 La Moutonne (FR)

(57) **Abrégé**

La présente invention concerne un dispositif portable de lecture optique (1) d'informations graphiques représentées sous forme d'image codée (3), ledit dispositif comportant :
- des moyens de lecture optique (5) de l'image codée, ayant un champ de prise de vue (7),
- un moyen de cadrage (9) de l'image codée sous le contrôle d'un utilisateur (10), lesdits moyens de cadrage définissant un périmètre de cadrage (11) configuré pour visualiser l'image codée à l'intérieur du périmètre ; Le dispositif se distingue en ce que ledit moyen de cadrage comprend un moyen de visée (13) à l'oeil nu pour cadrer et/ou ajuster en dimension l'image codée directement à travers le dispositif.

## Description

L'invention concerne un dispositif portable de lecture optique d'informations représentées sous forme d'une image graphique.

En particulier, il concerne un dispositif portable de sécurisation comportant des moyens de lecture optique pour lire une image 2D codée et afficher des informations contenues dans l'image.

Plus particulièrement, un tel dispositif est utilisé en pour effectuer des transactions sécurisées et/ou authentification via un réseau de communication tel que le réseau internet. Il comporte un capteur optique pour détecter ladite image codée. L'utilisateur place le dispositif portable près d'un écran d'un terminal de sorte que le capteur optique puisse lire l'image véhiculant des informations codées et en déduire les données codées. L'image peut être également sur tout support (tel que le papier par exemple). Certaines images codées permettront aussi de personnaliser des informations (par exemple, propres à l'utilisateur) contenues dans le dispositif ou une carte à puce.

Un tel dispositif de lecture permet des accès sécurisés à des systèmes d'information pour lesquels on vérifie l'identité d'un utilisateur en lui demandant par exemple de saisir son identifiant (son nom) et un mot de passe personnel, au moment où il se connecte au système d'information. L'identifiant et le mot de passe sont transmis au système d'information ; Le dispositif permet également, obtenir un numéro à usage unique à partir d'un code 2D pour notamment un simple accès au site web. Ainsi on peut autoriser ou non un accès par l'utilisateur ou une transaction. Le procédé d'authentification garantit ainsi que les informations sont bien transmises à la personne visée.

On connaît l'usage de certains téléphones portables comportant des moyens de lecture de code 2D. Le code 2D est pointé avec les moyens de saisie vidéo ou photo du téléphone puis visualisé et centré sur l'écran du téléphone avant de capturer l'image qui est exploitée par un programme d'analyse de l'image codée 2D adapté chargée dans la mémoire du téléphone. A l'heure actuelle, de tels téléphones portables, soit requièrent des moyens spécifiques de sécurité particulièrement onéreux, soit n'offrent pas la sécurité suffisante pour des transactions importantes.

Un but de l'invention est de pallier aux inconvénients mentionnés en proposant un procédé et un dispositif de lecture de codes graphiques qui soit plus économique et présente une sécurité nécessaire, tout en étant ergonomique et simple d'emploi pour un utilisateur.

A cet effet, la présente invention a pour objet un dispositif portable de lecture optique 1 d'informations graphiques représentées sous forme d'image codée, ledit dispositif comportant des moyens de lecture optique de l'image codée ayant un champ de prise de vue, un moyen de cadrage de l'image codée sous le contrôle d'un utilisateur, lesdits moyens de cadrage définissant un périmètre de cadrage configuré pour visualiser l'image codée à l'intérieur du périmètre ;

Le dispositif se distingue en ce que ledit moyen de cadrage comprend un moyen de visée à l'oeil nu pour cadrer et/ou ajuster en dimension l'image codée directement à travers le dispositif.

Selon d'autres caractéristiques du dispositif :
- Le moyen de visée comprend un système purement optique ;
- Le moyen de visée comprend une ouverture présentant un périmètre sensiblement égal à celui de l'image codée.
- Le moyen de lecture optique comprend un capteur optique disposé dans l'axe (Z1) du cadre de visée.

Ainsi, l'invention s'affranchit d'un écran et processeur d'affichage graphique qui est très onéreux tout en offrant un confort d'usage à l'utilisateur similaire à un téléphone portable indiqué précédemment.

L'invention offre une assistance à l'alignement du capteur optique avec le code et l'oeil, le code étant centré dans le champ du capteur optique.

Le système optique permet une compréhension optimale intuitive par l'utilisateur du mode d'emploi de ce dispositif. L'apprentissage du dispositif et son usage au quotidien seront plus rapides et plus naturels que tout autre système de l'art antérieur basé sur une simulation de la position de l'image codée.

L'invention propose un dispositif dédié aux transactions en étant exempt d'interface de communication avec un réseau externe tel qu'internet ou téléphonique exposant le dispositif à du piratage à distance.

Selon une application ou utilisation préférée destinée à réaliser une fonction de sécurisation d'une transaction, le dispositif ci-dessus comprend :
- des moyens d'affichage pour afficher des informations d'une transaction contenues dans l'image,
- et/ou des moyens d'identification /authentification d'un utilisateur,
- et/ou des moyens de génération d'un certificat de la transaction en fonction au moins d'informations codées de l'image et/ou mot de passe et/ou de données propres à l'utilisateur.

D'autres caractéristiques et avantages de l'invention ressortiront de la description suivante, donnée à titre d'exemple, sans caractère limitatif, en regard des dessins annexés sur lesquels :
- Les figures 1A, 1B représentent respectivement une vue schématique d'un dispositif portable de lecture optique de code 2D selon un premier et second mode de réalisation de l'invention ;
- La figure 2 représente une vue en coupe du dispositif de lecture conforme à un troisième mode de réalisation montrant des recoupements de champs optiques ;
- La figure 3 représente une vue en coupe du dispositif de lecture analogue à la figure précédente mais en perspective ;
- La figure 4 représente une vue en coupe du dispositif de lecture conforme à un quatrième mode de réalisation,
- La figure 5 représente une vue en coupe du dispositif de lecture analogue à la figure précédente mais en situation d'utilisation ;
- La figure 6 illustre le dispositif en cours d'utilisation par un utilisateur.

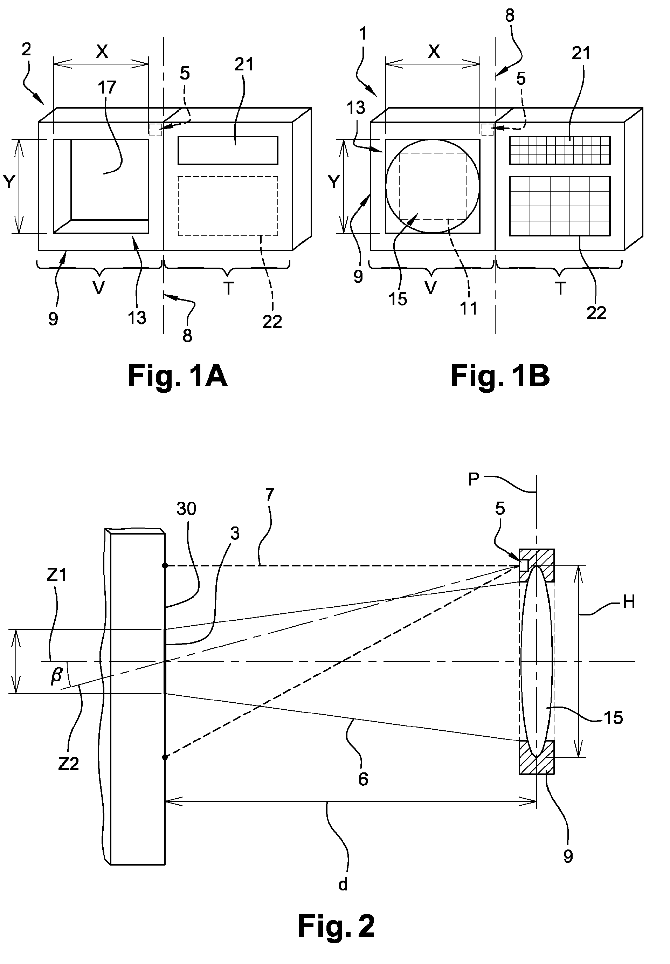

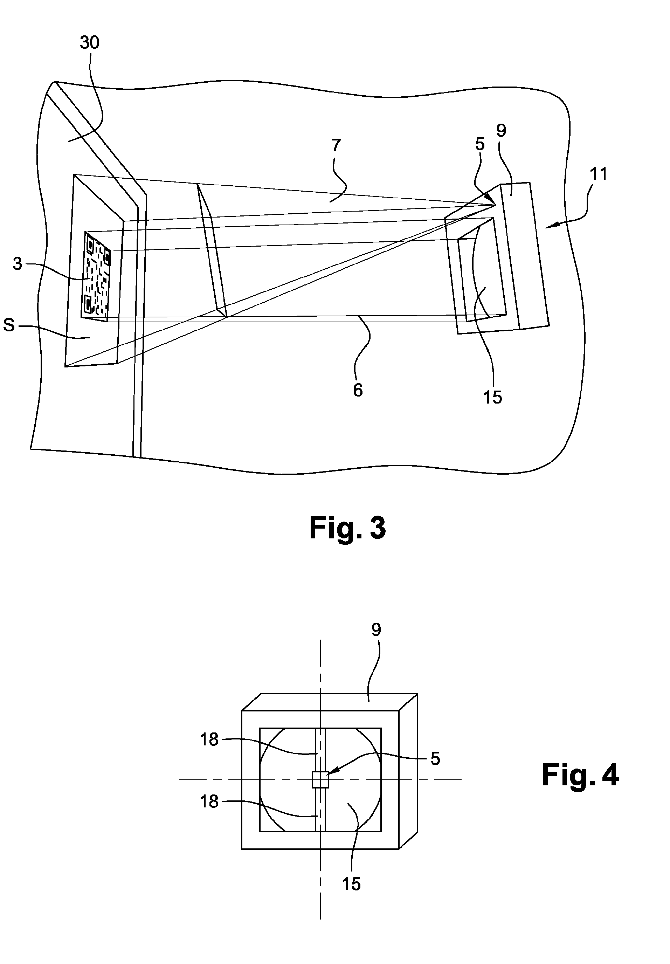

A la figure 1A est illustré un dispositif portable de lecture optique 1 d'informations graphiques conforme à un premier mode de réalisation de l'invention. Les informations graphiques sont par exemple représentées sous forme d'image codée 3 et de type 2D, visible à la figure 3. Les termes « code 2D », « code graphique », « image codée » sont équivalents dans la description.

Le dispositif 1 comporte des moyens de lecture optique 5 de l'image codée, ayant un champ de prise de vue 7, visible notamment à la figure 2. Typiquement, ce moyen optique de lecture comporte une électronique par exemple de type CCD ou CMOS relié à un circuit d'exploitation et de traitement de type connu (non représenté). Le circuit comporte une interface avec un utilisateur tel qu'un afficheur 21 pour communiquer des informations lues à l'utilisateur. Le circuit peut posséder une liaison avec une puce de sécurité ou un module de sécurité notamment sous forme de carte à puce. Ce circuit peut comporter des algorithmes de calcul d'information ou numéro de type à usage unique, un générateur de nombre aléatoire. Le calcul peut tenir compte d'informations véhiculées par le code graphique. Le dispositif peut comporter une interface avec l'utilisateur comme par exemple un clavier 22 pour saisir des données de l'utilisateur (mot de passe, ...) et/ou d'un système biométrique.

Le dispositif comporte un moyen de cadrage 9 de l'image codée, sous le contrôle d'un utilisateur 10. Les moyens de cadrage 9 définissent un périmètre de cadrage 13 configuré pour visualiser l'image codée à l'intérieur du périmètre. Le moyen de cadrage est ici carré mais peut être circulaire ou autre. Il est constitué ici dans l'exemple par un cadre en matière plastique moulé (V) relié par une charnière 8 à une partie (T) portant l'électronique de traitement, des interfaces avec l'utilisateur (afficheur, clavier le cas échéant) et un moyen d'alimentation électrique notamment par batterie. Le dispositif peut être repliable sur lui même autour de la charnière 8. Le dispositif peut être également monobloc selon une autre configuration.

Selon une caractéristique le mode de réalisation à la figure 1A, le moyen de cadrage 9 comprend un moyen de visée 13 à l'oeil nu pour cadrer et/ou ajuster en dimension l'image codée directement à travers le dispositif. En fait dans ce premier mode le plus démuni, fig. 1A, le moyen de visée comprend une ouverture 17 traversant le cadre et qui présente de préférence un périmètre sensiblement égal à celui de l'image codée. Il peut être supérieur à l'image codée. Cette ouverture peut être obturée le cas échéant par un verre ou plastique transparent plat (non déformant) pour protéger les interfaces une fois le dispositif replié.

Le moyen de visée 13 comprend un périmètre de visée ou de cadrage 13 définissant à l'intérieur une surface (correspondant à l'ouverture) supérieure ou égale à 3, 4 ou 6 ou 8 cm². Cette ouverture peut correspondre sensiblement ou est du même ordre de grandeur que l'image à lire ou décoder.

A la figure 1B, est illustré un dispositif similaire à la figure précédente (les mêmes références représentant les mêmes moyens). Il se caractérise en outre en ce que le moyen de visée 13 comprend un système purement optique 15 configuré pour avoir un effet optique (focale, champ...).

Le système optique 15 peut comprendre une ou plusieurs lentilles notamment une loupe ou au moins une lentille grossissante. Le cadre n'est pas indispensable. Le système optique peut être escamotable et/ou articulé lui même à une charnière ou autre fixation. Le cas échéant, le système optique peut être coulissant à l'intérieur de la partie T.

Comme précédemment, le périmètre de visée ou de cadrage 11 (en pointillé), définit à l'intérieur du cadre 9 une surface supérieure ou égale à 3, 4 ou 6 ou 8 cm². Il est légèrement à distance du bord de la lentille pour éviter de trop fortes déformations de bord. Le périmètre détermine une limite qu'une projection de l'image graphique 2D devra atteindre à l'intérieur de la lentille pour permettre une lecture dans des conditions optimales.

Le système optique donne l'impression d'une projection de l'image sur le dispositif au même titre qu'un affichage sur un téléphone portable ayant une fonction d'appareil photo équipé d'un capteur optique et d'un écran, l'image étant saisie par le capteur de l'appareil photo et affiché par l'intermédiaire du processeur graphique de l'appareil. Cet effet est distinct d'un simple viseur d'appareil photo dans lequel l'utilisateur a l'oeil collé au viseur.

A la figure 2, en utilisation, le bloc optique ici une lentille 15 du dispositif de la figure 1B, possède son axe Z1 centré sur le code graphique 3, le cadre 9 présente un plan (plan médian P de la lentille ou de l'ouverture 17) qui est de préférence sensiblement parallèle à l'écran 30 pour une bonne lecture sans déformation irrégulière du code. Lorsque le cadre 9 se trouve à une distance d comprise entre 10 et 20 cm, le capteur optique 5 ici placé en périphérie supérieure du cadre, se trouve décentré par rapport à l'axe Z1 de la lentille d'une distance, par exemple d'environ 2 à 4 cm.

Pour rattraper cet écart, selon une solution, le capteur optique peut comprendre un champ optique 7 suffisant pour couvrir le code graphique à cette distance d et rattraper le décentrage ci-dessus. Selon une autre solution retenue dans l'exemple, le capteur (et éventuellement son optique associée) est orienté de manière à ce que son axe Z2 de saisie optique croise l'axe Z1 de la lentille à la distance d déterminée comme étant une distance optimale de lecture préréglée.

Ainsi, le dispositif dispose d'un champ optique 7 et d'une orientation selon un axe Z2 pour couvrir suffisamment le code 2D. Le système optique permet un alignement du code graphique avec le dispositif de manière à centrer et de manière à régler la distance de capture du code obtenir une bonne résolution du graphisme.

A la figure 3 en perspective, (les mêmes références désignant les mêmes moyens que dans les autres figures) le dispositif est en situation de lecture d'un code graphique 3 affiché à l'écran 30 d'un ordinateur ; Par simplification, uniquement la partie V est représentée étant entendu que la partie T peut lui être fixée lors de l'utilisation; Le cas échéant, les deux parties V et T peuvent être fusionnées ensemble et comprendre par exemple, un afficheur disposé dans un des côtés du cadre 9.

Le système optique 15 est configuré, par exemple avec une certaine focale, de manière que la surface de l'image projetée sur le système optique ou vue par l'utilisateur à travers le système optique remplisse toute la surface contenue dans le périmètre 11. L'image s'agrandit à l'utilisateur au fur et mesure que le dispositif s'éloigne du code graphique 2D. Le cas échéant, on peut prévoir un fonctionnement (et/ou configuration de l'optique ou lentille) dans lequel l'image diminue au fur et à mesure où le dispositif se rapproche du code graphique. La distance d est par exemple égale à 10 à 20 cm tandis que la distance D entre l'oeil de l'utilisateur (fig. 4) est comprise par exemple entre 50 et 20 cm. La lentille a un diamètre ou un côté (X, Y) égal de 3 à 5 cm environ. Inversement, l'image augmente au fur et mesure que le dispositif s'éloigne de l'écran et se rapproche de l'oeil d'un utilisateur en situation de travail devant un ordinateur, par exemple de 40 cm à 60 cm. Les limites de lecture du dispositif correspondent à la capacité de résolution de l'image par le capteur. Le capteur optoélectronique dans l'exemple possède une résolution de 640 X 480 pixels et est du type **CMOS VGA.**

Le fait d'avoir dans son viseur tout ou partie de l'image codée peut suffire pour garantir le bon alignement de l'image avec le capteur optique. L'image codée devra être suffisamment élargie dans la lentille pour permettre au capteur optique d'obtenir une netteté suffisante du code graphique et si le capteur optique est désaxé de garantir un croisement suffisant de son champ de vision avec le code graphique.

A la figure 3, grâce à l'orientation du capteur, on voit que le capteur optique 5 dispose d'un champ optique 7 qui couvre une surface S de l'écran 30 centrée autour du code 2D affiché sur l'écran 30. Cette distance d permet d'obtenir une résolution suffisante du code graphique. Dans le cas d'un code 2D plus petit, il suffit d'éloigner un peu plus le dispositif par rapport au code graphique de manière à ce que sa projection telle que perçue visuellement par l'utilisateur sur la lentille, atteigne ou dépasse le périmètre de visée 11 dans la lentille 15. Le capteur dispose d'un champ optique 7 suffisant et avec une marge autour du code graphique. Cette marge de quelques centimètres autour du code graphique autorise un rapprochement supplémentaire du dispositif vers le code graphique, par exemple de 10 cm tout en conservant le code graphique dans le champ optique du capteur 5. Le dispositif a une distance minimale de fonctionnement par rapport à l'écran correspondant à la sensibilité ou autre caractéristique du capteur. La distance minimale de fonctionnement est ici de 8 cm de l'écran.

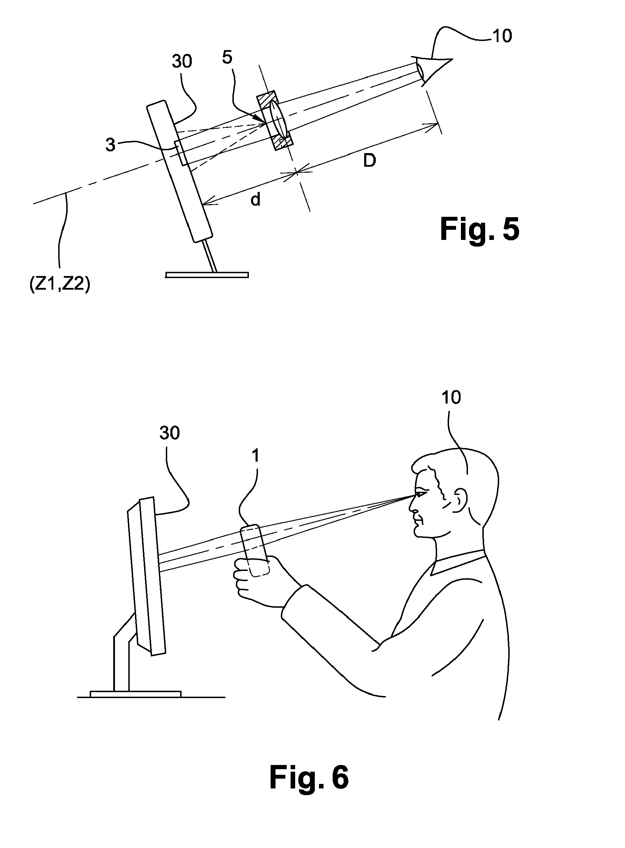

A la figure 5, selon une caractéristique d'un autre mode de réalisation, le moyen de lecture optique comprend un capteur optique 5 localisé à l'intérieur du moyen de cadrage 9, de préférence à l'intérieur du périmètre 11 de visée ou de cadrage. Dans l'exemple, le capteur 5 est ici centré sur l'axe Z1 de manière que son axe optique Z2 soit confondu avec Z2. Le capteur 5 est disposé frontalement à l'avant du dispositif en étant soutenu par un ou plusieurs bras 18 s'étendant du cadre 9 vers l'axe central Z1 Il peut être également disposé à l'arrière du dispositif derrière la lentille 15 ou dans l'ouverture 17 en cas d'absence de lentille comme à la figure 1A.

Grâce à cette disposition, il n'y a pas de parallaxe et le dispositif peut être plus éloigné que dans le mode précédent sans risquer de faire sortir le code graphique hors du champ du capteur. Le cas échéant, le capteur peut être disposé à l'arrière du cadre ou le cas échéant derrière la lentille par rapport au code graphique, pour recevoir une image focalisée par la lentille sur le capteur ; Ainsi, la lentille (ou système optique) peut être amenée à modifier ou améliorer les propriétés optiques du capteur optoélectronique (ex : angle de vision, mais aussi netteté). Le capteur peut aussi être même disposé dans la lentille (ou bloc optique) notamment une cavité ménagée à l'intérieur. Ces dispositions ci-dessus permettent d'approcher le cadre au plus près et faciliter encore plus une utilisation intuitive du dispositif en minimisant des erreurs de saisie en raison d'un décentrage ou d'une distance inappropriée.

Le capteur peut avoir une fonction de type « macro » pour capter de près ou bien être lui même doté d'une optique lui permettant d'être placée très près de l'écran voire contre l'écran, le capteur étant par exemple au minimum maintenu distant de l'écran par l'épaisseur du cadre du dispositif (1 à 3 cm). Le dispositif peut comprendre de préférence un moyen d'alerte notamment sonore, lumineux ou par vibration pour signaler l'acquisition et lecture du code 2D à l'utilisateur.

Le dispositif est destiné notamment à réaliser une fonction de sécurisation d'une transaction. Il comprend à cet effet des moyens d'affichage 21 pour afficher des informations d'une transaction contenues dans l'image ; il comprend cumulativement ou alternativement des moyens d'identification /authentification d'un utilisateur, des moyens de génération d'un certificat de la transaction en fonction au moins d'informations codées de l'image et/ou mot de passe et/ou données propres à l'utilisateur. Des libellés de la transaction affichés par l'écran de l'ordinateur concernant la transaction en cours (montant, numéro de compte...) n'étant pas sécurisés, le dispositif permettra l'affichage des données correspondantes extraites de l'image sécurisée. Le mot de passe peut être du type à usage unique (OTP). Le dispositif portable est de préférence relié à un composant de sécurité du type puce électronique, soudé dans le dispositif ou conditionné dans un corps de carte à puce. Dans le cas d'une carte, le dispositif peut comprendre une interface à contact ou sans contact avec une carte à puce.

Le dispositif est de préférence destiné à fonctionner en relation avec un serveur de sécurité comportant des moyens de sécurité pour vérifier ou valider la transaction sur la base du certificat ou information généré (e) par le dispositif et communiqué(e) au serveur de sécurité .

La figure 6 illustre comment utiliser le dispositif. En pratique, un utilisateur désirant lire un code 2D affiché sur son écran 30 d'ordinateur, positionne à la main le dispositif 1 entre l'oeil et le code graphique 3. Le moyen de visée optique est configuré de manière à cadrer l'image codée 3 sur la quasi surface de l'ouverture en tenant le dispositif par la main, à distance de l'oeil de l'utilisateur et de l'image, le dispositif étant plus distant de l'oeil que de l'image.

L'utilisateur vise le code à l'intérieur du cadre et ajuste la distance par rapport au cadre sur une trajectoire sensiblement perpendiculaire à l'écran. De préférence, l'utilisateur commence le déplacement du dispositif d'une position éloignée jusqu'à une position rapprochée dans laquelle le code 2 D se retrouve centré dans le périmètre du cadre de visée et couvre la quasi- totalité du périmètre.
Dans ces condition, le code 2D est sensé être suffisamment proche pour permettre sa prise de vue avec une résolution suffisante et son interprétation ou exploitation en lecture par le circuit électronique.

Un exemple de transaction à l'aide du dispositif de l'invention est décrit ci-après. Au préalable, l'utilisateur peut recevoir par courrier de sa banque des données confidentielles de personnalisation relatives à des secrets ou certificats, par exemple sous forme d'un imprimé également sous forme d'un code graphique 2D. Ces données permettent de personnaliser le dispositif lors de sa mise en route ou son initialisation. Il suffit à l'utilisateur de lire comme ci-dessus le code d'initialisation avec le dispositif pour le personnaliser selon des caractéristiques au moins de l'utilisateur et éventuellement clé de chiffrement associé. Le cas échéant, l'utilisateur sélectionne un mode de personnalisation avec un bouton ou clavier 22 avant la saisie de personnalisation.

Au cours d'une transaction avec une banque, des données relatives à une transaction (montant, objet, bénéficiaire, débiteur) sont affichées en clair à l'écran et également sous forme codée dans le code graphique avec le cas échéant des données utilisateur comme un numéro et coordonnées bancaires et/ou du bénéficiaire. L'utilisateur lit le code graphique avec son dispositif comme à la figure 6, puis un numéro ou mot de passe à usage unique est généré et affiché sur l'écran du dispositif. Ce numéro est représentatif des informations lues et des données de personnalisation préalablement lues. Entretemps, l'appareil peut stopper automatiquement l'acquisition de l'image et afficher les informations utiles à l'écran pendant un certain temps. Le dispositif peut cesser l'acquisition après un laps de temps (par exemple 4 secondes à 3 min) et notifier l'utilisateur de son échec, ne trouvant aucune image.

L'utilisateur tape ce numéro sur le clavier de l'ordinateur pour le valider et le transmettre avec la page affichée comprenant le code graphique à un serveur de sécurité de la banque. Le serveur récupère ces informations et les vérifie pour autoriser la transaction.

## Revendications

1. Dispositif portable de lecture optique 1 d'informations graphiques représentées sous forme d'image codée 3, ledit dispositif comportant :
- des moyens de lecture optique 5 de l'image codée, ayant un champ de prise de vue 7,
- un moyen de cadrage 9 de l'image codée sous le contrôle d'un utilisateur 10, lesdits moyens de cadrage définissant un périmètre de cadrage 11 configuré pour visualiser l'image codée à l'intérieur du périmètre,
**caractérisé en ce que** ledit moyen de cadrage comprend un moyen de visée 13 à l'oeil nu pour cadrer et/ou ajuster en dimension l'image codée directement à travers le dispositif.

2. Dispositif portable selon la revendication précédente, **caractérisé en ce que** le moyen de visée comprend un système purement optique 15.

3. Dispositif portable selon l'une quelconque des revendications précédentes, **caractérisé en ce que** le moyen de visée comprend une ouverture 17 présentant un périmètre sensiblement égal à celui de l'image codée.

4. Dispositif portable selon l'une quelconque des revendications précédentes, **caractérisé en ce que** le moyen de visée 13 comprend un périmètre de visée ou de cadrage 11 définissant à l'intérieur une surface supérieure ou égale à 3 ou 6 ou 8 cm².

5. Dispositif portable selon l'une quelconque des revendications précédentes, **caractérisé en ce que** le moyen de visée optique est configuré de manière à cadrer et aligner l'image codée sur la quasi surface de l'ouverture en tenant le dispositif par la main, le dispositif étant plus distant de l'oeil que de l'image.

6. Dispositif portable selon l'une quelconque des revendications précédentes, **caractérisé en ce que** le système optique 15 comprend notamment une loupe ou au moins une lentille grossissante.

7. Dispositif portable selon l'une quelconque des revendications précédentes, **caractérisé en ce que** le moyen de lecture optique 5 comprend un capteur optique électronique localisé à l'intérieur du cadre ou moyen de visée.

8. Dispositif portable selon l'une quelconque des revendications précédentes, **caractérisé en ce que** le moyen de lecture optique 5 comprend un capteur optique disposé dans l'axe (Z1) du cadre de visée.

9. Dispositif selon l'une quelconque des revendications précédentes, destiné à réaliser une fonction de sécurisation d'une transaction, **caractérisé en ce qu'**il comprend :
- des moyens d'affichage 21 pour afficher des informations d'une transaction contenues dans l'image,
- et/ou des moyens d'identification /authentification d'un utilisateur,
- et/ou des moyens de génération d'un certificat de la transaction en fonction au moins d'informations codées de l'image et/ou mot de passe et/ou de données propres à l'utilisateur.

10. Dispositif portable selon la revendication précédente, **caractérisé en ce que** le mot de passe est du type à usage unique.

11. Dispositif portable selon l'une quelconque des revendications 9 ou 10, **caractérisé en ce que** le dispositif portable est relié à un composant de sécurité 23 du type puce électronique, soudé dans le dispositif ou conditionné dans un corps 25 de carte à puce.

12. Dispositif portable selon l'une quelconque des revendications 9 à 11, **caractérisé en ce qu'**il est destiné à fonctionner en relation avec un serveur de sécurité comportant des moyens de sécurité pour vérifier ou valider la transaction sur la base du certificat ou information générée par le dispositif et communiquée au serveur de sécurité .
